(19) Europäisches Patentamt
European Patent Office
Office européen des brevets

(11) EP 1 207 176 A1

# (12) EUROPEAN PATENT APPLICATION

(43) Date of publication:
22.05.2002 Bulletin 2002/21

(51) Int Cl.[7]: C08G 77/34, C08G 77/38, D06M 15/643, D06M 15/647

(21) Application number: 00870277.1

(22) Date of filing: 20.11.2000

(84) Designated Contracting States:
AT BE CH CY DE DK ES FI FR GB GR IE IT LI LU MC NL PT SE TR
Designated Extension States:
AL LT LV MK RO SI

(71) Applicant: The Procter & Gamble Company
Cincinnati, Ohio 45202 (US)

(72) Inventors:
- Casado-Dominguez, Arturo Luis
1050 Brussels (BE)
- Hubesch, Bruno Albert Jean
3040 Neerijse-Huldenberg (BE)
- Goossens, Els Melanie Alfons
2890 Oppuurs (BE)

(74) Representative: Engisch, Gautier et al
NV Procter & Gamble Services Company SA,
100 Temselaan
1853 Strombeek-Bever (BE)

## (54) Process for preparing an organo-modified silicone by hydrosilation reaction

(57) The present invention relates to a process for preparing an organo-modified silicone by hydrosilation reaction and thereafter treating the hydrosilation reaction product with an aldehyde-scavenging agent. The present invention also relates to compositions comprising said organo-modified silicone. The compositions are designed to be applied to surfaces, especially surfaces susceptible of folding and creasing e.g. fabrics. More particularly the composition is designed to be used as an ironing aid.



Printed by Jouve, 75001 PARIS (FR)

## Description

### Technical Field

The present invention relates to a process of preparing an organo-modified silicone and compositions comprising products obtained by such a process. The compositions according to the present invention are suitable for the treatment of surfaces, preferably surfaces susceptible of forming folds or creases, more preferably fabrics. In a preferred aspect of the present invention the composition is used as an ironing-aid, whereupon the composition is applied to a fabric before or during the ironing process to facilitate ironing.

### Background

Ironing has long been seen as a household chore which the 'housewife' would gladly do without. Manufacturers of ironing products have sought to make the task easier and/or more pleasant by providing a number of products designed to be used when ironing, to aid the removal of folds and creases or improve the glide action of the iron over the fabric.

The Applicants have found that compositions comprising an organo-modified silicone made by hydrosilation reaction (hereinafter referred to as the organo-modified silicone) can be advantageous when treating surfaces, especially surfaces prone to forming folds and creases, for example fabrics. Organo-modified silicones are available on the market. However the reaction used to make the organo-modified silicones, also produces a large quantity of impurities. The organo-modified silicones available on the market are sold comprising said large quantity of impurities, since removing the impurities necessarily raises the cost of the material. These impurities decompose over time to produce an aldehyde, most often propanal and ultimately the corresponding acid if exposed to air, in this case propionic acid. Aldehydes are often very volatile compounds and have in some cases been found to be irritant. Propanal, an example of an aldehyde produced as discussed above, is a known irritant to skin, eyes and respiratory membranes. The corresponding acid, e.g. propionic acid has the effect of lowering the pH of the composition in which it is present, at which point the composition containing the propionic acid, may also become an irritant. Finally, as mentioned above aldehydes are typically very volatile and often release a pungent odour. Propanal and propionic acid release a pungent, offensive odour.

The presence and hazards of aldehydes and particularly the most commonly occurring aldehydes and acids, propanal and propionic acid, are known to manufacturers of organo-modified silicones of the present invention. However the methods of combating this problem as described in the prior art, focus on the industrial problem of exposure to such aldehydes during the manufacturing process. See for example, US 5 986 122 (Crompton) which describes a method to reduce the level of propanal in the finished product. This method involves the optimisation of the synthesis reaction used to make the organo-modified silicones by reducing the excess of alkylene in the reaction mixture. However even using this optimisation process, the commercially sold material comprises impurities, a proportion of which form propanal and then propionic acid over time. Such impurities, especially in concentrated products are unacceptable to the consumer.

The present invention seeks to provide a process of preparing and a composition comprising organo-modified silicones which do not exhibit consumer noticeable levels of aldehyde and/or the corresponding acid, especially propanal and/or propionic acid.

### Summary of the Invention

According to the present invention there is provided a process comprising the steps of preparing an organo-modified silicone by hydrosilation reaction and thereafter treating the hydrosilation reaction product with an aldehyde scavenging agent. In another embodiment, there is provided a composition comprising an organo-modified silicone obtained by hydrosilation reaction characterised in that the hydrosilation reaction product is further treated with an aldehyde scavenging agent.

In yet another aspect of the present invention there is provided a process of treating a surface, preferably a surface susceptible of forming folds or creases, more preferably a fabric, with the composition of the present invention. In yet another aspect of the present invention there is provided a process of ironing a fabric by applying the composition of the present invention to the fabric and subsequently ironing the fabric.

Finally there is also provided the use of the composition of the present invention as an ironing aid and the use of an aldehyde-scavenging agent to reduce the malodour of a composition comprising an organo-modified silicone made by hydrosilation reaction.

Detailed description of the Invention

The present invention relates to a process comprising the steps of preparing an organo-modified silicone by hydrosilation reaction and thereafter treating the hydrosilation reaction product with an aldehyde scavenging agent. By the term "hydrosilation reaction product", it is meant the crude, unpurified mixture of products formed during the hydrosilation reaction. The present invention also relates to compositions comprising the hydrosilation reaction product of said process. Such compositions are particularly useful in treating surfaces. More preferably said compositions are particularly useful in treating surfaces which are susceptible of forming folds or creases, even more preferably fabrics. In a particularly preferred embodiment the compositions of the present invention are useful as ironing aids and can be applied to the fabrics either through-the-wash cycle, when the fabrics are drying or dried. Alternatively and more preferably the compositions are applied to fabrics when dry and most preferably before or during ironing.

In a particularly preferred embodiment the composition of the present invention is used in conjunction with an iron comprising a cavity into which is placed a cartridge comprising the composition of the present invention. The composition is then applied to the fabrics through the iron. Such irons are described in WO99/27176. The cartridge can be refilled when empty with a fresh supply of the composition or alternatively the empty cartridge itself may be replaced for another comprising the composition. In this embodiment it is preferred that the composition is in concentrated form and then mixed with the water held in the reservoir of the iron normally used for steam production. This embodiment not only provides a convenient mechanism for provision of the composition to the iron, but is also advantageous in that the composition lasts longer. However using the composition in concentrated form from storage within the iron, further exacerbates the problem described above with respect to the production of aldehyde and corresponding acid, owing to the increased temperature of the iron. The concentrated product comprises higher concentration of impurities and higher concentration of propanal and propionic acid. Furthermore the heat of the iron increases the production and the volatilisation of the aldehyde, accelerating and increasing the adverse effects discussed above.

The Applicants have found that compositions comprising the reaction product of the hydrosilation reaction to produce an organo-modified silicone, in combination with an aldehyde scavenging agent produce significantly less aldehyde, such that the pungent odour and other adverse effects are not perceived by the consumer.

The composition is preferably aqueous comprising from 60 to 95 % water, more preferably 75 % to 92 % water and most preferably 80 % to 90 % water. As discussed above in a particularly preferred embodiment of the present invention, the composition is in concentrated form. By 'concentrated' it is meant that the composition comprises at least 5 % active ingredients and no more than 95 % water. In a preferred aspect of the present invention, the composition comprises at least 10% actives, more preferably at least 15% active ingredients. By active ingredients, we mean any ingredient other than water, for example those listed under organo-modified silicones, aldehyde scavenging agents and optional components.

The pH of the composition may be any suitable pH for cleaning the intended surface. However where the surface is a fabric is it preferred that the pH of the composition be greater than 6, more preferably greater than 7.5 and most preferably greater than 8.5.

Organo-Modified Silicone

The organo-modified silicone of the present invention is made by a hydrosilation reaction. By hydrosilation reaction it is meant the reaction of a polymeric silanic hydrogen fluid (A) and an allyl-modified ether or amine (B) to make an organo-modified silicone reaction product having the general formula (C).

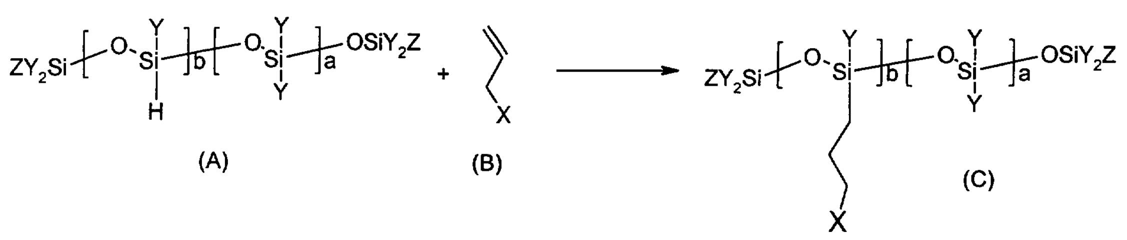

a + b is from 1-200, preferably 1-100, more preferably 1-25; Y is an alkyl or phenyl group, preferably methyl; Z is Y, $-(CH_2)_n-X$, wherein n = 2 or 3; and
wherein X is OR, NHR' or NR"R", and the symbols R, R', R" are identical or different and represent hydrogen or a monovalent hydrocarbon radical chosen from linear or branched alkyl radicals having from 1 to 4 carbon atoms, the phenyl radical, the benzyl radical, the 3,3,3-trifluoropropyl radical, the 2-aminoethyl radical, and the 4-(2,2',6,6'-tetramethylpiperidin) radical.

When organo-modified silicones are manufactured in this way an excess of an allyl-modified ether or amine (B) must be used. This may result in a hydrosilation reaction product containing unreacted allyl-modified ether or amine (B) and/or vinyl-modified ether or amine (D). Whilst not wishing to be bound by theory, it is believed that it is this vinyl-modified ether or amine that decomposes to an aldehyde via hydrolysis:

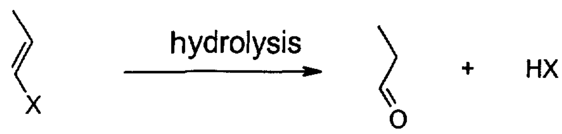


(D)

X = OR, NHR', NR"R'"

The organo-modified silicone (C) may be made by other routes, for example by addition polymerisation. However such alternative reaction processes are expensive and thus are not commercially successful.

In a preferred embodiment of the present invention the allyl-modified ether or amine is a polyalkenene oxide (D), N-allyl, N-alkyl amine (E), 2,2' 6,6' tetramethyl 4-allyloxy piperidine (F) or mixtures thereof.

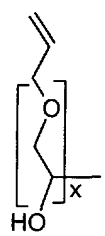

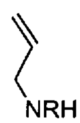

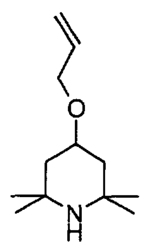

(D) (E) (F)

A particularly preferred organo-modified silicone are the polyalkylene oxide-modified polysiloxanes having a dimethyl polysiloxane hydrophobic moiety and one or more hydrophilic polyalkylene side chains. Preferably the polyalkylene side chains are selected from polyethylene, polypropylene, polybutylene or mixtures thereof. The preferred polyalkylene oxide-modified polysiloxanes have the general formula:

$$R1—[(CH3)2SiO]a—[(CH3)(R1)SiO]b—Si(CH3)2—R1$$

wherein a + b are from about 1 to about 200, preferably from about 1 to about 100, more preferably from about 1 to about 25, and each R1 is the same or different and is selected from the group consisting of methyl and a poly(ethyleneoxide/propyleneoxide) copolymer group having the general formula:

$$-(CH2)n\ O(C2\ H4\ O)c\ (C3\ H6\ O)d\ R2$$

with at least one R1 being a poly(ethyleneoxy/propyleneoxy) copolymer group, and wherein n is 3 or 4, preferably 3; c has a value of from 1 to about 100, preferably from about 6 to about 100; d is from 0 to about 14, preferably from 0 to about 3; and more preferably d is 0; and each R2 is the same or different and is selected from the group consisting of hydrogen, an alkyl having 1 to 4 carbon atoms, and an acetyl group, preferably hydrogen and methyl group. Each polyalkylene oxide-modified polysiloxane has at least one R1 group being a poly(ethyleneoxide / propyleneoxide) copolymer group.

Nonlimiting examples of this type of surfactants are the Silwet® surfactants which are available OSI Specialties Inc., a Division of Witco, Danbury, Connecticut. Representative Silwet® surfactants which contain only ethyleneoxy ($C_2H_4O$) groups are as follows.

| Name | Average MW | Average a+b | Average total c |
|---|---|---|---|
| L-7608 | 600 | 1 | 8 |
| L-7607 | 1,000 | 2 | 17 |
| L-77 | 600 | 1 | 9 |
| L-7605 | 6,000 | 20 | 99 |
| L-7604 | 4,000 | 21 | 53 |
| L-7600 | 4,000 | 11 | 68 |
| L-7657 | 5,000 | 20 | 76 |
| L-7602 | 3,000 | 20 | 29 |
| L-7622 | 10,000 | 88 | 75 |

Nonlimiting examples of Silwet® surfactants which contain both ethyleneox ($C_2H_4O$) and propyleneoxy ($C_3H_6O$) groups are as follows:

| Name | Average MW | EO/PO ratio |
|---|---|---|
| L-7200 | 12,000 | 50/50 |
| L-7001 | 20,000 | 40/60 |
| L-7002 | 8,000 | 50/50 |
| L-7210 | 13,000 | 20/80 |
| L-7200 | 19,000 | 75/25 |
| L-7220 | 17,000 | 20/80 |

The molecular weight of the polyalkyleneoxy group (R1) is less than or equal to about 10,000. Preferably, the molecular weight of the polyalkyleneoxy group is less than or equal to about 8,000, and most preferably ranges from about 300 to about 5,000. Thus, the values of c and d can be those numbers which provide molecular weights within these ranges. However, it is preferred that the number of ethyleneoxy units ($-C_2H_4O$) in the polyether chain (R1) must be sufficient to render the polyalkylene oxide polysiloxane water-soluble. If propyleneoxy groups are present in the polyalkylenoxy chain, they can be distributed randomly in the chain or exist as blocks. Mixtures of Silwet® surfactants which contain both ethyleneoxy and propyleneoxy groups, are also preferred.

Preferred Silwet® surfactants are the L-7001, L-7087, L-7200, L-7280, L-7600, L-7608, L-7622, L-7657. The effect of the polysiloxane, polyethylene oxide (PEO) and polypropylene oxide (PPO) on water solubility of the polyalkylene oxide-modified polysiloxane can be expressed in the form of a tertiary composition diagram (figure 1). Polyalkylene oxide-modified polysiloxanes which are insoluble in water are found in region III, partially soluble polyalkylene oxide-modified polysiloxanes are found in region II and water-soluble polyalkylene oxide-modified polysiloxanes are found in region I. Preferably the polyalkylene oxide-modified polysiloxanes of the present invention are selected from those falling within region II and most preferably, region I of the diagram:

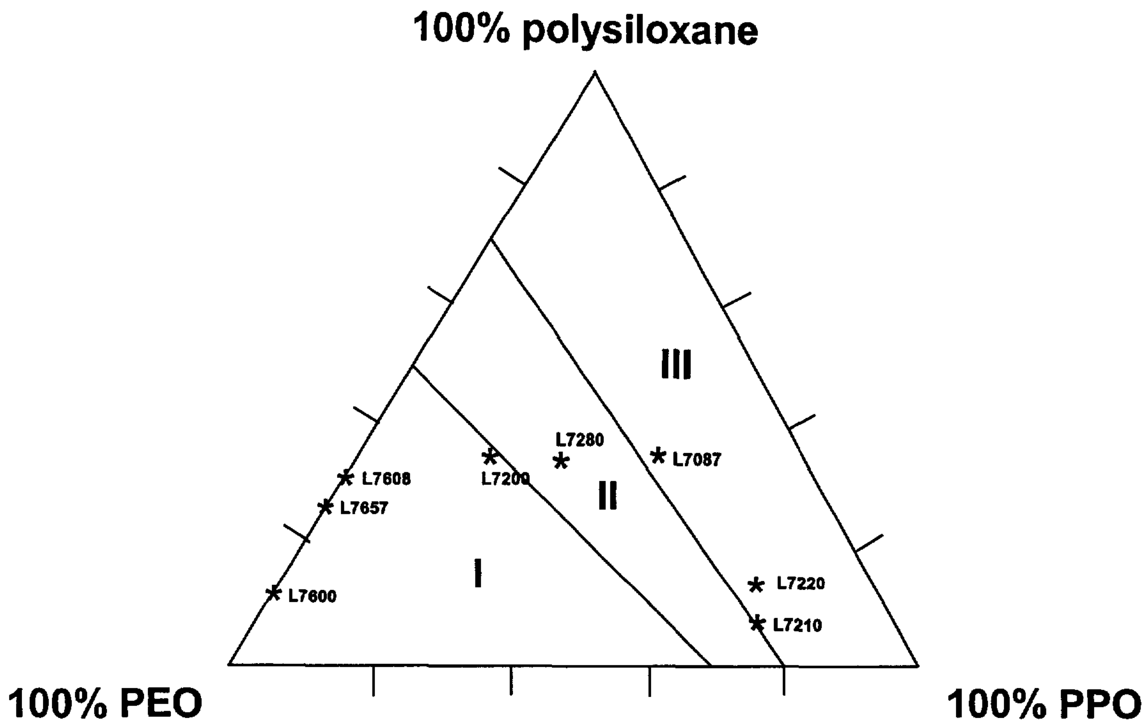


Figure 1

The above diagram is to be interpreted as known in the prior art. Specifically, the content of polysiloxane in the organo-modified silicone, is represented by the point which is inversely proportional to the distance between the point and the "100% polysiloxane" vertex. Thus, the content of PEO and PPO in the organo-modified silicone are represented by a point which is inversely proportional to the distance between the point and the "100% PEO" and "100% PPO" vertices, respectively.

Nonlimiting examples of Silwet® surfactants in region I are: L-7600, L-7608 and L-7657. Nonlimiting examples of Silwet® surfactants in region II are: L-7200 and L-7280. The approximate composition of these materials is indicated with an asterisk (*) in the above tertiary composition diagram. In a preferred example the compositions of the present invention comprise at least two different organo-modified silicones, more preferably polyalkylene oxide-modified polysiloxanes. In a preferred embodiment the compositions of the present invention comprise a polyalkylene oxide-modified polysiloxane from region 1 of the above diagram and a polyalkylene oxide-modified polysiloxane from region II.

The preparation of polyalkylene oxide- modified polysiloxanes is well-known in the art. Polyalkylene oxide-modified polysiloxanes of the present invention can be prepared according to the procedure set forth in U.S. Pat. No. 3,299,112, incorporated herein by reference. Typically, polyalkylene oxide-modified polysiloxanes of the surfactant blend of the present invention are readily prepared by a hydrosilation reaction between a hydrosiloxane (i.e., a siloxane containing silicon-bonded hydrogen) and an alkenyl ether (e.g., a vinyl, allyl, or methallyl ether) of an alkoxy or hydroxy end-blocked polyalkylene oxide). The reaction conditions employed in addition reactions of this type are well-known in the art and in general involve heating the reactants (e.g., at a temperature of from about 85°C to 110°C) in the presence of a platinum catalyst (e.g., chloroplatinic acid) and a solvent (e.g., toluene).

A further example of an organo-modified silicone is an aminosilicone. Any commercially known aminosilicone obtained by hydrosilation reaction may be used in the compositions of the present invention. The organo-modified silicone of the present invention may be an amino silicones comprising a sterically hindered functional group, i.e. polyorganosiloxanes having, per mole, at least one unit of general formula:

$$(R)_a (X)_b Z\, Si\, (O)_{\frac{3-(a+b)}{2}}$$

in which :

The symbols R are identical or different and represent a monovalent hydrocarbon radical chosen from linear or branched alkyl radicals having from 1 to 4 carbon atoms, the phenyl radical, the benzyl radical and the 3,3,3-trifluoropropyl radical;

The symbols X are identical or different and represent a monovalent radical chosen from a hydroxyl group and a linear or branched alkoxy radical having from 1 to 3 carbon atoms;

The symbol Z represents a monovalent group of the formula $R^1$-U-S in which:

$R^1$ is a divalent hydrocarbon radical chosen from :

- linear or branched alkylene radicals having from 2 to 18 carbon atoms;
- alkylenecarbonyl radicals in which the linear or branched alkylene part contains 2 to 20 carbon atoms;
- alkylenecyclohexylene radicals in which the linear or branched alkylene part contains from 2 to 12 carbon atoms and the cyclohexylene part contains an - OH group and optionally 1 or 2 alkyl radicals having from 1 to 4 carbon atoms;
- radicals of the formula $R^2$-O-$R^3$- in which the radicals $R^2$ and $R^3$, which are identical or different, represent alkylene radicals having 1 to 12 carbon atoms;
- radicals of the formula $R^2$-O-$R^3$- in which the radicals $R^2$ and $R^3$ have the meanings indicated above and one of them or both are substituted by one or two -OH group(s);
- radicals of the formula $R^2$-COO-$R^3$- and $R^2$-OCO-$R^3$- in which the radicals $R^2$ and $R^3$ have the meanings above;
- radicals of the formula $R^4$-O-$R^5$-O-CO-$R^6$- in which the radicals $R^4$, $R^5$ and $R^6$, which are identical or different, represent alkylene radicals having 2 to 12 carbon atoms and the radical $R^5$ is optionally substituted by a hydroxyl group;
- radicals of the formula

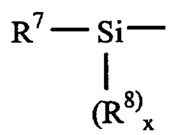

in which the radical $R^7$ represents alkylene radicals having 1 to 4 carbon atoms, and the radical $R^8$ represents linear or branched alkylene radicals having 1 to 4 carbon atoms, the phenyl radical and the phenylalkyl radical where the linear or branched alkyl part contains 1 to 3 carbon atoms; and where x is a number chosen between 0,1 and 2.

U represents -O- or -$NR^9$-, $R^9$ being a radical chosen from a hydrogen atom, a linear or branched alkyl radical having from 1 to 6 carbon atoms, a divalent radical - $R^1$- having the meaning indicated above, one of the valency bonds being connected to the nitrogen of -$NR^9$- and the other being connected to a silicon atom and a divalent radical of the formula -$R^{10}$-N($R^1$)-S in which $R^1$ has the meaning indicated above, and $R^{10}$ represents a linear or branched alkylene radical having from 1 to 12 carbon atoms, one of the valency bonds (that of $R^{10}$) being connected to the nitrogen atom of -$NR^9$- and the other (that of $R^1$) being connected to a silicon atom.

S represents a monovalent group, in which :

- the free valency is a carbon atom, carrying a secondary or tertiary amine function, comprised in a cyclic hydrocarbon chain or in a heterocyclic chain comprising from 6 to 30 carbon atoms, in which the two atoms of the cyclic chain in the positions $\alpha$ and $\alpha'$ relative to the nitrogen atom, do not comprise any hydrogen atom;
- the free valency is a carbon atom, carrying a secondary or tertiary amine function, comprised in a linear hydrocarbon chain comprising 6 to 40 carbon atoms, in which the two atoms of the cyclic chain in the positions $\alpha$ and $\alpha'$ relative to the nitrogen atom, do not comprise any hydrogen atom.

Preferably, the secondary or tertiary amine function in S is incorporated in a piperidyl group.

a is a number chosen from 0,1 and 2;

b is a number chosen from 0,1 and 2;

the sum a + b is not greater than 2.

The polyorganosiloxane used can additionally comprise (an) other siloxyl unit(s).

Such amino silicones comprising a sterically hindered functional group which are suitable for use herein are commercially available from Rhodia under the trade name Rhodorsil ®, in particular Rhodorsil ® H 21645 or Rhodorsil ® H 21650 or Silicex ® , in particular Silicex ® 263.

Aldehyde Scavenging Agent

The aldehyde scavenging agent is incorporated as an essential feature of the present invention. Since one of the key objectives of the present composition is to reduce the level of unpleasant and pungent aldehyde odour, it is preferred that the aldehyde scavenging agent and/or the reaction product of the aldehyde scavenging agent be malodour-free.

The aldehyde scavenging agents of the present invention are preferably selected from the group consisting of amines, imines, alcohols, sulfites, mercapto-compounds and mixtures thereof. More preferably the aldehyde scavenging agents are selected from the group consisting of amines, aminoalcohols, diols and mixtures thereof.

In a particularly preferred embodiment the aldehyde scavenging agent is selected from the group of agents which are capable of reducing the concentration of aldehyde in an aqueous solution comprising 0.026 moles/liter aldehyde and 0.026 moles/liter aldehyde scavenging agent, by at least 50%.

The Applicants have found that specifically monoethanolamine (MEA), dipropylene glycol (DPG) and mixtures thereof seem to provide particularly effective results in the present invention. MEA and DPG have the added advantage in that the adduct formed in reaction with the aldehyde is stable at basic pH and is fully compatible with other conventional ingredients of the composition.

Optional Components

In addition to the organo-modified silicone and the aldehyde scavenging agent which are essential components of the compositions of the present invention, the composition may also comprise other optional components. Optional components can include, but are not limited to disinfecting components, organic acids-based surfactants, chelants, solvents, builders, stabilisers, softeners, soil suspenders, dye transfer agents, brighteners, perfumes, enzymes, dispersant, dye transfer inhibitors, pigments, perfumes, moisturizers, antioxidants, preservatives, pH buffers, dyes or mixtures thereof.

Process of use

The present invention also comprises a process of treating a surface with the composition of the present invention. In a preferred embodiment the surface treated is one which is susceptible to the formation of folds and/or creases. Even more preferably the surface is a fabric. In such a process the composition may be applied to the surface using any known method, for example by spraying, pouring or by application using a cloth, sponge, wipe or other device.

The composition may be applied to the surface whether wet or dry. In the situation where the surface is a fabric the composition may be applied though-the-wash either in a tub, bucket, bath or sink or washing machine. Alternatively the composition may be applied when the fabrics are drying or more preferably, when dry. In a particularly preferred embodiment the composition is applied to the fabric by spraying. More particularly the present invention relates to a process of ironing a fabric wherein the composition is applied to the fabric at the time of ironing, more preferably by spraying. The composition may be sprayed using a known spraying device or alternatively may be sprayed from a specially designed iron comprising a cavity and cartridge as described in WO99/27176.

Examples

The following provide examples of the compositions of the present invention.
These examples are in no way meant to be limiting.

| | | A | B | C | D |
|---|---|---|---|---|---|
| Silwet® L7200 | | 20% | 15% | - | - |
| Silwet® L7604 | | 5% | 2% | - | - |

(continued)

| | | A | B | C | D |
|---|---|---|---|---|---|
| Silicex 263 | | - | - | 10% | 12% |
| Silwet L7230 | | - | - | 12% | 15% |
| MEA | | 0.3% | - | | 0.25% |
| DPG | | - | 0.55% | 0.55% | 0.55% |
| Proxel GXL | | 0.015% | 0.015% | - | - |
| Bardac 2250 | | - | - | 0.5% | 0.015% |
| Perfume | | 0.75% | 0.75% | 0.75% | 0.75% |
| Sodium dodecabenzene sulfonate | | 0.35% | 0.35% | - | - |
| C??? Fatty alcohol (E010) | | - | - | 0.45% | 0.45% |
| HCl | | - | - | 0.001% | 0.001% |
| water | | balance | balance | balance | balance |

**Silwet L7200**, polyalkenele oxide-modified silicone from Crompton (99% active).
**Silwet L7604,** polyalkenele oxide-modified silicone from Crompton (99% active).
**Silicex 263,** 3-(2,2',6,6'-tetramethylpiperidin-4-yloxy)propyl]-modified silicone from Rhodia (35% active).
**Silwet L7200**, polyalkynele oxide-modified silicone from Crompton (99% active).
**MEA** means monoethanolamine
**DPG** means dipropylene glycol
**Proxel GXL,** BIT preservative from Avencia (21% active).
**Bardac 2250**, didecyldimethylammonium chloride from Lonza (50% active).

## Claims

1. A process comprising the steps of preparing an organo-modified silicone by hydrosilation reaction and thereafter treating the hydrosilation reaction product with an aldehyde scavenging agent.

2. A composition comprising an organo-modified silicone obtained by hydrosilation reaction **characterised in that** the hydrosilation reaction product is further treated with an aldehyde scavenging agent.

3. A composition according to claim 2 wherein the composition is in concentrated form.

4. A composition according to any of claim 2 or 3 wherein the organo-modified silicone has general formula

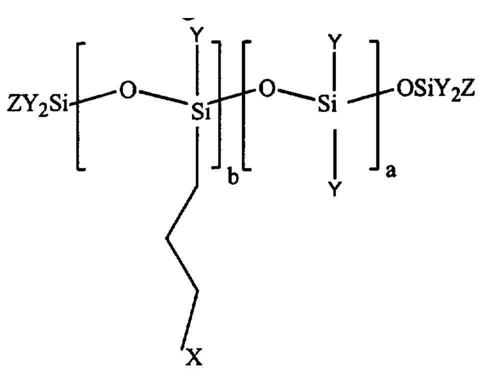

wherein a + b = 1-200; Y = alkyl, phenyl; Z = Y, $-(CH_2)_n-X$ (n = 2,3); and
X is OR, NHR' or NR"R", and the symbols R, R', R" or R"' are identical or different and represent hydrogen or a monovalent hydrocarbon radical chosen from linear or branched alkyl radicals having from 1 to 4 carbon atoms, the phenyl radical, the benzyl radical, the 3,3,3-trifluoropropyl radical, the 2-aminoethyl radical, and the 4-(2,2',6,6'-tetramethylpiperidin) radical.

**5.** A composition according to any of claim 2 to 4 wherein the organo-modified silicone is a polyalkylene oxide-modified silicone.

**6.** A composition according to any of claims 2 to 5 wherein the alkylene units of the polyalkylene oxide-modified silicone are ethylene, propylene, butylene units or mixtures thereof.

**7.** A composition according to any of claims 2 to 6 wherein the organo-modified silicone consists of at least a first and at least a second organo-modified silicone, wherein the first and second organo-modified silicones are different.

**8.** A composition according to any of claims 2 to 7 wherein the aldehyde scavenging agent and/or the reaction product of the aldehyde scavenging agent is malodour-free.

**9.** A composition according to any of claims 2 to 8 wherein the aldehyde scavenging agent is selected from the group consisting of amines, imines, alcohols, sulfites, mercapto-compounds and mixtures thereof.

**10.** A composition according to any of claims 2 to 9 wherein the aldehyde scavenging agent is selected from the group consisting of amines, aminoalcohols, diols and mixtures thereof.

**11.** A composition according to any of claims 2 to 10 wherein the aldehyde scavenging agent is selected from the group of agents which are capable of reducing the concentration of aldehyde in an aqueous solution comprising 0.026 moles/liter aldehyde and 0.026 moles/liter aldehyde scavenging agent, by at least 50%.

**12.** A composition according to any of claims 2 to 11 wherein the aldehyde-scavenging agent is selected from the group consisting of monoethanolamine, dipropylene glycol and mixtures thereof

**13.** A composition according to any of claims 2 to 12 having pH greater than 6

**14.** A process of treating a surface, preferably a surface susceptible of forming folds or creases, more preferably a fabric, with a composition according to any of claims 2 to 13.

**15.** A process of ironing a fabric surface by applying the composition according to any of claims 2 to 13 to the surface and subsequently ironing the surface.

**16.** A process according to either of claims 14 or 15 wherein the composition is applied to the surface by spraying.

**17.** A process according to claim 16 wherein the composition is sprayed by means of a refill cartridge for an iron.

**18.** The use of a composition according to any of claim 2 to 13 as an ironing aid.

**19.** The use of an aldehyde-scavenging agent to reduce the malodour of a composition comprising a organo-modified silicone made by hydrosilation reaction.

European Patent Office

# EUROPEAN SEARCH REPORT

Application Number
EP 00 87 0277

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 745 632 A (DOW CORNING TORAY) 4 December 1996 (1996-12-04) * example 1 * | 1-4,8,9, 11,13 | C08G77/34 C08G77/38 D06M15/643 D06M15/647 |
| X | EP 0 770 725 A (DOW CORNING TORAY) 2 May 1997 (1997-05-02) * example 5 * | 1-3,8,9, 11,13 | |
| X | EP 0 916 689 A (WITCO) 19 May 1999 (1999-05-19) * page 3, line 25 - line 31 * * page 3, line 48 * | 1-6, 8-11,13 | |
| X | EP 0 879 840 A (GOLDSCHMIDT) 25 November 1998 (1998-11-25) * page 8, line 25 - line 27 * | 1-6, 8-11,13 | |
| X | WO 99 55953 A (PROCTER&GAMBLE) 4 November 1999 (1999-11-04) * page 8 - page 9 * * page 54 * | 1-4,8-19 | TECHNICAL FIELDS SEARCHED (Int.Cl.7) |
| X | WO 99 55950 A (PROCTER&GAMBLE) 4 November 1999 (1999-11-04) * page 14 * * page 37 * | 1-6,8-19 | C08G D06M |

The present search report has been drawn up for all claims

| Place of search | Date of completion of the search | Examiner |
|---|---|---|
| THE HAGUE | 8 August 2001 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 87 0277

This annex lists the patent family membersrelating to the patent documents cited in the above-mentioned European search report.
The members are as contained in the European Patent Office EDP file on
The European Patent Office is in no way liable for these particulars which are merely given for the purpose of information.

08-08-2001

| Patent document cited in search report | Publication date | Patent family member(s) | Publication date |
|---|---|---|---|
| EP 745632 A | 04-12-1996 | JP 8325381 A | 10-12-1996 |
| | | US 5616756 A | 01-04-1997 |
| EP 770725 A | 02-05-1997 | JP 9095535 A | 08-04-1997 |
| EP 916689 A | 19-05-1999 | BR 9815301 A | 24-10-2000 |
| | | SG 66501 A | 21-03-2000 |
| EP 879840 A | 25-11-1998 | AT 199734 T | 15-03-2001 |
| | | DE 59800521 D | 19-04-2001 |
| | | JP 10330489 A | 15-12-1998 |
| | | US 5891977 A | 06-04-1999 |
| WO 9955953 A | 04-11-1999 | AU 3762399 A | 16-11-1999 |
| | | EP 1075562 A | 14-02-2001 |
| WO 9955950 A | 04-11-1999 | AU 7361298 A | 16-11-1999 |
| | | EP 1082483 A | 14-03-2001 |

EPO FORM P0459

For more details about this annex : see Official Journal of the European Patent Office, No. 12/82